(19) Europäisches Patentamt
European Patent Office
Office européen des brevets

(11) EP 2 420 530 B1

(12) EUROPEAN PATENT SPECIFICATION

(45) Date of publication and mention of the grant of the patent:
19.06.2013 Bulletin 2013/25

(51) Int Cl.:
C08J 9/00 (2006.01)    C08J 9/32 (2006.01)

(21) Application number: 10173548.8

(22) Date of filing: 20.08.2010

(54) **Foamable polymer preparations and compositions having improved sorption properties**

Aufschäumbare Polymerzubereitungen und -zusammensetzungen mit verbesserten Sorptionseigenschaften

Préparations expansibles de polymère et compositions comportant des propriétés de sorption améliorées

(84) Designated Contracting States:
AL AT BE BG CH CY CZ DE DK EE ES FI FR GB GR HR HU IE IS IT LI LT LU LV MC MK MT NL NO PL PT RO SE SI SK SM TR

(43) Date of publication of application:
22.02.2012 Bulletin 2012/08

(73) Proprietor: Süd-Chemie IP GmbH & Co. KG
80333 München (DE)

(72) Inventors:
• Kroehnke, Christoph
85405 Nandlstadt (DE)
• Koch, Achim
85368 Moosburg (DE)

(74) Representative: HOFFMANN EITLE
Patent- und Rechtsanwälte
Arabellastrasse 4
81925 München (DE)

(56) References cited:
US-A- 4 243 754        US-A- 4 916 173
US-A1- 2008 210 901

**Description**

**Field of the invention**

The present invention relates to a polymer preparation foamable at low temperature, to a composition comprising a foamed synthetic polyolefin and a desiccant and/or an oxygen scavenger and having high and rapid absorption of humidity and/or oxygen, to a moulded article produced from said composition and to a process for the production of said foamable polymer preparations, said compositions and said moulded articles.

**Background of the invention**

Desiccants are used to control moisture in various environments so as to avoid damage to moisture-sensitive products such as scientific/electronic/optical instruments, speciality chemicals or pharmaceuticals and leather goods. Desiccants are typically contained in discrete moisture-permeable packages and these packages are included within the packaging for the moisture-sensitive product e.g. in a jar of tablets or within the housing of a scientific/electronic instrument.

In particular, if the packaged product is not used at once, but in portions, the problem arises that moisture-containing air from the surrounding atmosphere enters the package each time it is opened. This is a common case with respect to pharmaceutical products in the form of tablets, pills, lozenges and the like which are consumed piece by piece.

Hence, in such cases, the container is opened and re-closed various times over a period of several days, several weeks or even longer.

Each time the container is opened, ambient atmosphere carrying oxygen and possibly a significant amount of moisture inevitably enters the container. If the moisture is not removed from the atmosphere within the container after the container has been closed again, a deterioration of the packaged product can not be prevented. Therefore, in particular in applications such as pharmaceutical products, it is necessary to provide efficient moisture removing means such as desiccants within the container. At the same time, it has to be avoided that the desiccant contaminates the product. Therefore, it has been proposed to incorporate the desiccant into a solid non-granular polymer matrix which also allows the desiccant material to be processed by using standard polymer processing techniques such as described in EP 1 739 028 A1.

For these reasons, desiccant-containing polymer compositions have attracted attention which is reflected by the documents described in the following.

WO 2006/079713 A1 discloses a compact polymer composition comprising a polymer, a desiccant and a water saturation indicator.

EP 0 599 690 A1 and WO 2005/061101 A1 describe compact polymer compositions comprising a polymer and a desiccant which can be used in the manufacture of packaging containers.

In EP 2 096 135 A1, it has been described that the moisture absorption properties of desiccant-containing polymer compositions can be improved by foaming the desiccant-containing polymer composition.

US 4,916,173 A discloses a curable polyurethane composition comprising a polyisocyanate, a polyol, a triol, 3 to 10 % of a molecular sieve and 10 to 40 % of hollow microspheres. Said microspheres are not heat-expandable.

Foaming of a polymer can generally be accomplished by incorporating a foaming agent, i.e. an agent which generates one or more gaseous products which form bubbles or cells with the polymer matrix. The generation of said gaseous product(s) is commonly initiated and controlled by heating the agent above a specific minimum temperature.

Foaming agents acting by means of a thermally induced chemical decomposition reaction in the course of which one or more gaseous products are formed, are commonly referred to as "chemical foaming agents". In contrast, foaming agents acting by physical processes such as transition of a compound from the liquid to the gaseous state and expansion of the gaseous phase in response to a variation of pressure and/or temperature without chemical conversion are commonly referred to as "physical foaming agents". Physical foaming agents are usually incorporated into a polymer melt at elevated pressure.

Generally, in packaging materials for the storage of products that are intended for ingestion by human beings or animals, the presence of substances representing potential hazards to human or animal health has to avoided in order to exclude the risk of contamination of the stored products. This implies that the use of a foaming agent in a packaging material should not result in the formation of such potentially hazardous substances.

For instance, in EP 0 400 460 B, which relates to moisture-absorbent polymer compositions containing a thermoplastic polymer, a desiccant and a foaming agent, chemical foaming agents such as azoisobutyronitrile, azodicarbonamide and 4,4'-oxybenzene sulfonylhydrazide are used. It is known that organic decomposition products are formed by said foaming agents. For instance, thermal decomposition of azodicarbonamide yields cyanuric acid and isocyanic acid as by-products of gas formation. Thermal decomposition of 4,4'-oxybenzene sulfonylhydrazide results in the formation of organic disulfides and polymeric thiosulfate as by-products. Said by-products commonly considered as being potentially hazardous to human or animal health and their presence in a desiccant-containing polymer composition hence impairs the use of said polymer compositions in packaging materials for the storage of products that are intended for ingestion by human beings or animals.

In EP 2 096 135 A1, a mixture of an alkali metal hydrogencarbonate and citric acid or a salt thereof has been described as the foaming agent. This foaming agent has the advantage that during its action by thermal decomposition essentially carbon dioxide and water are yielded as the gaseous products.

As no chemical conversion is involved in the use of physical foaming agents, the generation of possibly hazardous by-products is usually is no issue and, as the agents usually are highly volatile and rapidly escape from the packaging material into the atmosphere, contamination of products stored in a packaging material can be avoided. Commonly used physical foaming agents are low-boiling liquids such as hydrocarbons (for instance alkanes and isoalkanes having up to five carbon atoms), ethers (for instance, dimethylether or diethylether) or gases (for instance nitrogen, air or carbon dioxide).

A foaming agent is incorporated and dispersed in the matrix polymer in a molten or plastified state, i.e. at elevated temperature. Elevated temperature is also required in order to activate the foaming agent, namely to generate a sufficient vapour pressure of a physical foaming agent or, in the case of a chemical foaming agent, to initiate thermal decomposition and the generation of gases. For instance, a mixture of an alkali metal hydrogencarbonate and citric acid usually requires a temperature of about 150 °C in order to become active. Most other chemical foaming agents require similar or even higher temperatures.

Usually, the step of incorporation and dispersion of a physical blowing agent is carried out under pressure in order to avoid premature and uncontrolled formation of bubbles or cells. When the pressure on the polymer/foaming agent dispersion is released, the dispersed gas generated by decomposition of the chemical foaming agent or by evaporation of a physical foaming agent expands and generates bubbles or cells within the polymer. At this point, the viscosity of the polymer has to be sufficiently low in order to allow expansion of the gas bubbles formed within the polymer matrix such that cells having an acceptable size can be obtained. However, viscosity must not be too low in order to avoid that the formed gas bubbles migrate through the polymer matrix, coalesce and, in an extreme case, escape from the matrix polymer by migration to the surface of the polymer body. In said extreme case, it may be impossible to obtain a foamed polymer.

While bubbles/cells form in the polymer matrix, the polymer is gradually solidified such that viscosity is increased such that the gas bubbles/cells are eventually trapped within the polymer body.

In the case of thermoplastic polymer compositions, the process of foaming can generally be conveniently carried out by using an extruder, for instance. Within the extruder barrel, the matrix polymer is molten or plastified such that the foaming agent can be incorporated and dispersed in the polymer matrix under pressure by means of the action of the extruder screw. When the polymer/foaming agent dispersion exits the extruder die, pressure is released such that bubbles can form and expand and, at the same time, the viscosity of the polymer is increased by cooling the extrudate.

It becomes apparent from the above, that in order to accomplish specific foam properties such as a specific average cell size and/or cell number, it is necessary to carefully adjust parameters such as the pressure difference and the viscosity of the matrix polymer as explained in the following, irrespective of whether chemical or physical foaming agents are used.

- The pressure difference between the state in which the foaming agent is incorporated and dispersed in the matrix polymer and the state in which the polymer is solidified while the bubbles/cells are formed.
  A high pressure drop will usually lead to the generation of relatively large bubbles/cells which can result in the rupture of a portion of adjacent cell walls such that large open voids within the matrix polymer result.
  In contrast, a low pressure drop will usually lead to the generation of relatively small bubbles/cells which are located distant from each other within the matrix polymer. In this case, the properties of the foam can be very similar to the properties of the unfoamed matrix polymer composition such that the effect desired (for instance an increase of the volumen and/or a reduction of density) is scarcely accomplished.
- The viscosity of the matrix polymer.
  In a matrix polymer having a low viscosity when the pressure is released from the polymer/foaming agent dispersion, there is a tendency that undesirably large bubbles/cells are formed. As a result, expansion of the polymer composition can be irregular such that it can be difficult or impossible to allow the foamed polymer composition to assume a precise shape by means of expansion. Furthermore, the presence of large open voids can deteriorate the mechanical strength of the foamed polymer composition.
  Furthermore, as mentioned hereinabove, large bubbles tend to migrate through the polymer melt by virtue of the buoyant force which can result in the foaming agent escaping from the matrix polymer without leaving bubbles, cells or voids.
  In a matrix polymer having a high viscosity when the pressure is released from the polymer/foaming agent dispersion, there is the tendency that only small bubbles/cells are formed which are located distant from each other within the matrix polymer. In this case, the properties of the foam tend to be very similar to the properties of the unfoamed matrix polymer composition.

Hence, in this case as well as in the case of an escape of the gas bubbles from the matrix polymer, the advantageous effect on the moisture absoption properties of a desiccant-containing polymer composition as reported in EP 2 096 135 A1 as cited hereinabove can scarcely be accomplished.

These problems become particularly significant when the matrix polymer has a relatively low molecular weight. At the elevated temperature required in order to activate the foaming agent such a matrix polymer usually has a low viscosity which makes it difficult or impossible to maintain the generated bubbles in dispersion with the matrix polymer as set out hereinabove. Furthermore, viscosity of a molten polymer having a relatively low molecular weight remains relatively low until solidification is reached.

Thus, in view of the abovementioned drawbacks, polymers having a relatively low molecular weight have not been used as matrix polymers for the production of foamed polymeric compositions containing functional additives.

On the other hand, for some applications, it is advantageous that polymers having a relatively low molecular weight can be molten or plastified state at temperatures that are significantly lower than the plastification or melt temperature of a polymer having a high molecular weight. Thus, a relatively low viscosity can be imparted to said low-molecular weight polymers at a temperature at which a polymer having a high molecular weight is not molten or plastified.

(1) Melt-coating of pre-manufactured moulded plastic articles

The relatively low temperature to which polymers having a low molecular weight have to be heated in order to allow plastic deformation is advantageous, when a pre-manufactured moulded plastic article is to be coated with a molten polymer composition. Usually, a moulded plastic article is manufactured from a polymer having a high molecular weight in order to impart mechanical strength and dimensional stability to said article. When such a plastic article moulded from a first polymer having a high molecular weight is coated with a melt of a second polymer which likewise has a high molecular weight, said second polymer has to be heated to a relatively high temperature in order to allow sufficient plastic deformation. By contacting the melt of said second polymer with the surface of the moulded plastic article, heat is delivered to the moulded plastic article which can lead to softening and deformation.

In order to avoid excessive delivery of heat, it hence is desirable to use as said second polymer a polymer having a molecular weight lower than the first polymer.

(2) Incorporation of temperature-sensitive additives

Furthermore, the relatively low temperature to which polymers having a low molecular weight have to be heated in order to allow plastic deformation is advantageous, when temperature-sensitive additives are to be incorporated and dispersed in the polymer.

As exemplary temperature-sensitive additives, certain oxygen scavengers can be mentioned which function by means of a reaction mechanism commonly referred to as autoxidation, i.e. by means of the oxidation of chemical bonds having an increased reactivity towards oxygen, for instance carbon-hydrogen bonds in the vicinity of carbon-carbon double bonds such as in an allylic position. Oxygen scavengers of this type typically contain substructures rich in double bonds such as ethylenic carbon-carbon double bonds.

Due to the reactivity of the carbon-carbon double bond substructures, oxygen scavengers of this type tend to deteriorate when exposed to elevated temperatures. Therefore, it is difficult to incorporate said oxygen scavengers into polymers requiring a high temperature for melting or plastifiying.

In view of the advantages related to a foam morphology reported in EP 2 096 135 A1, it is desirable to have available a preparation from which a foamed polymer composition comprising a desiccant and/or an oxygen scavenger can be produced.

It is an object of the present invention to provide preparations comprising a (i) polymer and (ii) a desiccant and/or an oxygen scavenger from which compositions having high and rapid absorption of humidity and/or oxygen can be produced and which compositions are suitable for applications such as melt-coating a moulded polymer article without deterioration of the oxygen scavenger and dimensional stability of the melt-coated moulded polymer article due to the impact of elevated temperatures.

A second object of the present invention is to provide compositions having high and rapid absorption of humidity and/or oxygen and which are useful in applications such as packaging materials, especially packaging material for food, beverages, pharmaceutical, diagnostic, electronic and other specialty products.

A third object is the provision of moulded articles comprising said compositions having high and rapid absorption of humidity and/or oxygen.

**Description of the Invention**

Surprisingly, it was found that the first object can be achieved by providing a foamable polymer preparation comprising

(a) 19.9 to 89.9 % by weight of at least one synthetic polyolefin which single synthetic polyolefin or group of synthetic polyolefins has

(i) a water absorption of 0.5 % or less, determined according to ASTM D570:1998 wherein a sample of cylindrical shape having a diameter of 25 mm and a thickness of 2.0 mm is used, and
(ii) a softening point as measured by the method according to ASTM D3104-99 and/or a dropping point as measured by the method according to ASTM D3954-94 in the range of 60 to 170 °C,

(b) 10 to 80 % by weight of at least one functional additive which is (b1) a zeolite and/or (b2) an oxygen scavenger, and

(c) 0.1 to 5.0 % by weight of heat-expandable microspheres containing a liquid and/or gaseous hydrocarbon encapsulated in a gas-tight thermoplastic shell that expand when heated to the softening point and/or the dropping point of said at least one polymer (a),

wherein
the percentages are related to the total weight of (a), (b) and (c), and
the total amount of (a), (b) and (c) is 70 to 100 % by weight, based on the total weight of the composition.
In the following, the components of such a foamable polymer preparation of the invention will be explained in more detail.
As indicated above, the foamable polymer preparation of the present invention comprises at least one synthetic polyolefin (a), at least one functional additive (b) which is (b1) a zeolite and/or (b2) an oxygen scavenger, and heat-expandable microspheres (c). These components will be described in the following.

(a) Polymer

In order to be suitable for being used in the present invention, the single synthetic polyolefin or group of synthetic polyolefins (a) has to have a combination of properties which will be explained in the following.
As a first property (i), the single synthetic polyolefin or group of synthetic polyolefins has a water absorption determined as the relative weight increase after immersing a sample of said single synthetic polyolefin or group of synthetic polyolefins in distilled water at 23 °C for a period of 24 hours of 0.5 % or less. The water absorption is determined according to the method described in ASTM D570:1998, wherein the sample of said polymer(s) used in this immersion test is a body having a cylindrical shape with a diameter of 25 mm and a thickness of 2.0 mm.
Such a sample can be prepared by melting the synthetic polyolefin(s) in a mould having a diameter of 25 mm and a depth of 2.0 mm on a hot plate at a temperature sufficient for softening the synthetic polyolefin(s) to such an extent that the polymer adopts the shape of the mould. Heating the mould and the synthetic polyolefin(s) to the softening point or the dropping point usually can be sufficient for this purpose. From a practical point of view, moulding can be carried out at a temperature of 20-30 °C higher than the softening point and/or the dropping point of the synthetic polyolefin, for instance. After the single synthetic polyolefin or the group of synthetic polyolefins has adopted the shape of the mould, the mould is allowed to cool, the moulded synthetic polyolefin sample is removed from the mould and stored in a desiccator, if it is not immediately used in the further test procedure.
The weight of the sample is determined before the sample is immersed into distilled water having a temperature of 23 °C for 24 hours. After 24 hours of immersion, the sample is removed from the distilled water, patted dry with a lint-free cloth and weighed again in order to determine the sample weight after immersion.
Water absorption of the sample is calculated as a percentage according to the following formula (1):

```
Water absorption = [(sample weight after immersion) - (sample
weight before immersion)]/(sample weight before immersion)
× 100                              (1)
```

If the difference between the sample weight after immersion and the sample weight before immersion is 0.5 % or less, i.e. if the value obtained from the above formula (1) is 0.5 or less, the synthetic polyolefin has the property (i) required for being suitable in the present invention.

In preferred embodiments, the water absorption is 0.35 % or less. In most preferred embodiments, the water absorption is 0.2 % or less.

As the second property (ii), the single synthetic polyolefin or group of synthetic polyolefins suitable for being used in the present invention have a softening point as determined by the method according to ASTM D3104-99 or a dropping point as determined by the method according to ASTM D3954-94 in the range of 60-170 °C.

In preferred embodiments, the softening point and/or the dropping point is in the range of 65-145 °C. In more preferred embodiments, the softening point and/or the dropping point is in the range of 85-120 °C.

The method for determining the softening point according to ASTM D3104-99 is defined as the method at which a sample of the synthetic polyolefin, suspended in a cylindrical cup with a 6.35-mm hole in the bottom, flows downward a distance of 19 mm as the sample is heated at a linear rate of 2 °C/minute in air. The softening point hence relates to a specific temperature characterizing a synthetic polyolefin and therefore is usually indicated using the unit "°C".

The method for determining the dropping point according to ASTM D3954-94 in essence differs from the method for determining the softening point in that the diameter of the hole in the bottom of the cylindrical cup is 2.8 mm (instead of 6.35 mm). Thus, the dropping point is usually determined for synthetic polyolefins that have a relatively low viscosity when they soften, whereas the softening point is usually determined for synthetic polyolefins that have a relatively high viscosity.

Hence, in order to evaluate whether a specific synthetic polyolefin or group of synthetic polyolefins has the property (ii) required for being used in the present invention, it is possible to determine the softening point as a first parameter. If the softening point is lower than the lower limit of the abovementioned range, the dropping point is determined. If the dropping point is within the abovementioned range, the synthetic polyolefin has the property (ii) required for being suitable in the present invention.

In a preferred embodiment of the invention, the single synthetic polyolefin or group of synthetic polyolefins (a) has a water absorption of 0.5 % or less and a softening point and/or a dropping point in the range of 65-145 °C. In a more preferred embodiment, the single synthetic polyolefin or group of synthetic polyolefins (a) has a water absorption of 0.5 % or less and the softening point and/or the dropping point is in the range of 85-120 °C.

In another preferred embodiment, the single synthetic polyolefin or group of synthetic polyolefins (a) has a water absorption of 0.35 % or less and a softening point and/or a dropping point in the range of 65-145 °C. In a more preferred embodiment, the single synthetic polyolefin or group of synthetic polyolefins (a) has a water absorption of 0.35 % or less and the softening point and/or the dropping point is in the range of 85-120 °C.

In yet another preferred embodiment, the single synthetic polyolefin or group of synthetic polyolefins (a) has a water absorption of 0.2 % or less and a softening point and/or a dropping point in the range of 65-145 °C. In a more preferred embodiment, the single synthetic polyolefin or group of synthetic polyolefins (a) has a water absorption of 0.2 % or less and the softening point and/or the dropping point is in the range of 85-120 °C.

In a most preferred embodiment, the single synthetic polyolefin or group of synthetic polyolefins (a) has a water absorption of 0.2 % or less and a softening point and/or a dropping point in the range of 85-120 °C.

The synthetic polyolefin(s) suitable in the present invention can be selected from homopolymers and copolymers of monoolefins and diolefins, for example polypropylene (PP), polyethylene (PE) which optionally can be crosslinked high density polyethylene (HDPE), low density polyethylene (LDPE), linear low density polyethylene (LLDPE) and branched low density polyethylene (BLDPE).

The synthetic polyolefin can also be a copolymer of two or more monomers forming repetitive units comprised in the above-mentioned synthetic polyolefins. The term "copolymer" as used herein means random (statistical) copolymer, block copolymer, graft copolymer or star copolymer. Thus, synthetic polyolefins of monoolefins and diolefines grafted with maleic anhydride are suitable as the synthetic polyolefin(s) used in the present invention.

The polyolefins having said properties (i) and (ii) usually have a weight-average molecular weight Mw in the range of from 1,500-30,000 g/mol as determined by gel permeation chromatography (GPC) according to DIN 55672-1:2007-08 and a ratio of weight-average molecular weight Mw to number-average molecular weight Mn Mw/Mn (also referred to as polydispersity) of 1.8-4. Such synthetic polyolefins can for instance be polymers of polyethylene and polypropylene obtainable by metallocene catalysis, optionally containing an $\alpha$-olefin having 4-8 carbon atoms as a comonomer.

synthetic polyolefins suitable in the invention are commercially available under the tradenames "Licocene", "Affinity" and "Luwax" (from Clariant, Dow and BASF, respectively), for instance.

Generally, the at least one synthetic polyolefin (a) is present in an amount of 19.9 to 89.9 % by weight. In preferred embodiments, the synthetic polyolefin is present in an amount of 24.5 to 69.5 % by weight, more preferably 29 to 59 % by weight; wherein the weight percentages relate to the total weight of compounds (a), (b) and (c) of the foamable polymer preparation as specified hereinabove.

(b) Functional additive

The functional additive (b) is (b1) a zeolite and/or (b2) an oxygen scavenger, depending on the properties desired.
Generally, the functional additive (b) is present in an amount of 10 to 80 % by weight. In preferred embodiments, the functional additive can be present in an amount of from 30 to 75 % by weight, more preferably 40 to 70 % by weight; wherein the percentages relate to the total weight of compounds (a), (b) and (c) of the foamable polymer preparation as specified hereinabove.

(b1) Zeolite

Zeolites which are commonly also referred to as molecular sieves are alumosilicates having a three-dimensional structure forming cage-like voids that can be accessed by small molecules via pores. Thus, zeolites are capable of absorbing or adsorbing polar small molecules such as water. Therefore, zeolites are capable of absorbing or adsorbing water in gaseous form from surrounding atmosphere and, hence, they act as a desiccant.
Examples for zeolites suitable for water absorption are materials known under the name "Linde Type A" (LTA) ("Zeolith A") such as Zeolite MS 3A, Zeolite MS 4A and Zeolite MS 5. A detailed compilation of zeolites is listed in EP 0881193 B1 and in "Atlas of Zeolite Framework Types" published on behalf of the Structure Commission of the International Zeolite Association (Ch. Baerlocher, W. M. Meier, D. H. Olson, eds.), Elsevier 2001. Furthermore, suitable zeolites are listed by international three letter codes as published by the Structure Commission of the International Zeolite Association: ABW, ACO, AEI, AEL, AEN, AET, AFG, AFI, AFN, AFO, AFR, AFS, AFT, AFX, AFY, AHT, ANA, APC, APD, AST, ASV, ATN, ATO, ATS, ATT, ATV, AWO, AWW, BCT, BEA, BEC, BIK, BOG, BPH, BRE, CAN, CAS, CDO, CFI, CGF, CGS, CHA, CHI, CLO, CON, CZP, DAC, DDR, DFO, DFT, DOH, DON, EAB, EDI, EMT, EON, EPI, ERI, ESV, ETR, EUO, EZT, FAR, FAU, FER, FRA, GIS, GIU, GME, GON, GOO, HEU, IFR, IHW, ISV, ITE, ITH, ITW, IWR, IWV, IWW, JBW, KFI, LAU, LEV, LIO, LIT, LOS, LOV, LTA, LTL, LTN, MAR, MAZ, MEI, MEL, MEP, MER, MFI, MFS, MON, MOR, MOZ, MSE, MSO, MTF, MTN, MTT, MTW, MWW, NAB, NAT, NES, NON, NPO, NSI, OBW, OFF, OSI, OSO, OWE, PAR, PAU, PHI, PON, RHO, RON, RRO, RSN, RTE, RTH, RUT, RWR, RWY, SAO, SAS, SAT, SAV, SBE, SBS, SBT, SFE, SFF, SFG, SFH, SFN, SFO, SGT, SIV, SOD, SOS, SSY, STF, STI, STT, SZR, TER, THO, TON, TSC, TUN, UEI, UFI, UOZ, USI, UTL, VET, VFI, VNI, VSV, WEI, WEN, YUG, ZON.

(b2) Oxygen scavenger

Typical oxygen scavengers which are heat-sensitive and hence can not be incorporated into polymers melting at high temperatures without deterioration are those which function by means of a reaction mechanism commonly referred to as autoxidation, i.e. by means of the oxidation of chemical bonds having an increased reactivity towards oxygen, for instance carbon-hydrogen bonds in the vicinity of carbon-carbon double bonds such as in an allylic position. Oxygen scavengers of this type typically contain substructures rich in double bonds such as ethylenic carbon-carbon double bonds.
Examples of such substructures are polybutadiene, polyisoprene, diene oligomers such as squalene, substructures obtainable by polymerization or oligomerization of dicyclopentadiene, norbornadiene, 5-ethylidene-2-norbornene, substructures of carotenoids such as β-carotene, unsaturated fatty acids such as oleic, ricinoleic, dehydrated ricinoleic and linoleic acids, and ethylenically unsaturated cyclic substructures such as cyclohexene substructures. An oxygen-scavenging substructure comprising a cyclohexene moiety is contained in ethylene/methyl acrylate/cyclohexenyl methyl acrylate terpolymers (also referred to as "EMCM") as described in WO 02/051914 A and US 7,097,890. Further examples of oxygen scavengers are described in WO 02/051914 A, US 5,346,644 and EP 0 520 257 A, for instance.
Oxygen scavengers comprising a substructure containing a cyclohexene moiety are preferred in the present invention as oxygen scavengers of this type have high reactivity towards oxygen and hence are particularly active oxygen scavengers.
Other types of oxygen scavengers can contain organahydrazides, dialkylketoximes, tocopherols and tocotrienols (commonly also referred to as members of the vitamin E family), ascorbic acid and alkali metal and alkaline earth metal salts thereof, erythorbic acid (also known as isoascorbic acid) and alkali metal and alkaline earth metal salts thereof , dialkylhydroxylamines, hydroquinone derivatives and catechol derivatives, oxidase-based enzymes, benzyl acrylate, metal-containing compositions reactive towards oxygen such as compositions containing iron, platinum or cobalt, for instance.
Due to the reactivity of the carbon-carbon double bond substructures, oxygen scavengers of this type tend to deteriorate when exposed to elevated temperatures. Therefore, it is difficult to incorporate said oxygen scavengers into polymers requiring a high temperature for softening, melting or plastifying.
Examples of oxygen scavengers suitable for being used in the present invention are commercially available under the tradename PharmaKeep® (Mitsubishi Gas Chemical Co., Ltd. (Japan)), ZerO$_2$ (FoodScience, Australia), OSP

(Chevron Chemicals) and Shelfplus (BASF, Switzerland).

(c) Heat-expandable microspheres

The heat-expandable microspheres act as a foaming agent and function by expansion of said microspheres. In the following, the term "heat-expandable microspheres" will also be abbreviated as "HEM". In the art, said microspheres are also referred to as microballoons in view of their expandability.

HEM include a thermoplastic polymer shell and a core material encapsulated by said shell.

The core material is a volatile hydrocarbon such as n-butane, iso-butane, n-pentane, iso-pentane, neo-pentane, cyclopentane, iso-octane, halogenated hydrocarbons or mixtures thereof and is present in the form of a gas, liquid or a combination thereof. As explained hereinabove with respect to physical foaming agents, the core material expands upon heating.

Said polymer shell consists of thermoplastic polymers which do not allow diffusion of the core material. For instance, polymer or copolymers derived from ethylenic hydrocarbons (such as polyethylene, polystyrene, vinyl chloride, acrylonitrile), polyamides, polyesters, urea-formaldehyde polymers or acrylonitrile-vinylidene chloride copolymers. The thermoplastic material forming the shell of the HEM can be a copolymer containing by weight 20-60 % of units derived from vinylidene chloride, 20-60 % of units derived from acrylonitrile and 0-40 % of units derived from acrylic or styrenic monomers. The acrylic monomer is methyl or ethyl acrylate or methacrylate, for instance.

In a preferred embodiment, the HEM contains iso-butane as the core material.

Heating of the HEM causes the polymer shell to soften and, simultaneously, the core material to expand the softened polymer shell. The shell material does usually not allow significant diffusion of the core material and, furthermore, does usually not rupture upon expansion such that the core material does not escape from the microsphere. Therefore, HEM are suitable for forming a foam having a closed-cell morphology. Due to this closed-cell morphology, escape of the physical foaming agent present as the core material is prevented, although the viscosity of the polymer (a) usually is low when heated.

The HEM typically have a diameter of 70 $\mu$m or less such as 5-60 $\mu$m and can be expanded by heating to a temperature sufficient to soften the polymer shell to such an extent that the pressure generated by the core material expands the HEM.

The expanded microspheres obtained typically have an increased diameter of 20-100 $\mu$m such as 40-80 $\mu$m, depending on the diameter of the non-expanded HEM and on the temperature to which the HEM was heated. For instance, expanded microspheres having a diameter of 40 $\mu$m can be obtained from HEM having a diameter of 10 $\mu$m. The diameters values indicated above are average values and were measured by low-angle laser light scattering (LALLS).

The HEM suitable in the present invention has a polymer shell that allows expansion of the HEM at the softening point and/or the dropping point of the polymer (a) of the foamable polymer preparation of the present invention. For instance, relative to the volume at 23 °C in an essentially non-expanded state the HEM show an increase in volume of at least 20 % at the softening point and/or the dropping point of the polymer (a) of the foamable polymer preparation. Generally, it can be desirable that the HEM show a volume increase of at least 50 % at the softening point and/or the dropping point of the single polymer or the group of polymers (a) such as at least 100 %, at least 250 % or at least 500 %.

The increase in volume can be determined by filling a sample of the HEM into a glass capillary suitable for being used in a melting point apparatus such that the capillary is filled to a height of about 1/10 of its total length (i.e. filled to about 5-10 mm at a total length of the capillary of 80 mm, for instance) and determining the height of the filling. Subsequently, the filled capillary is inserting into the melting point apparatus that has been preheated to the temperature at which the volume increase is to be measured and left in the apparatus for 30 seconds. After removing the capillary from the apparatus the height of the filling is determined and the volume increase is calculated. The temperature to which the melting point apparatus is preheated for instance is a temperature equal to or higher than the softening point and/or a dropping point of the single polymer or the group of polymers (a) present in the foamable polymer preparation.

HEM suitable for the present invention are described in patent applications DE 195 31 631 A1, DE 34 36 592 A1, GB 2 191 945 A, US 4,843,104, GB 1,044,680 and US 3,615,972 and are commercially available under the tradename Expancel® from AkzoNobel.

Typically, the HEM is present in an amount of 0.1 to 5.0 % by weight. In preferred embodiments, the HEM is present in an amount of from 0.5 to 2.0 % by weight, more preferably 1.0 to 1.5 % by weight; wherein the weight percentages relate to the weight of the foamable polymer preparation as specified above.

(d) Adjuvants

Optionally, the foamable polymer preparation can comprise further components which are not particularly limited. In particular, any standard adjuvant commonly used in polymer formulations can also be incorporated into said foamable polymer preparation, unless it deteriorates foamability and/or water absorption of the composition obtained from such preparation. Examples comprise fillers, fibres, processing stabilizers, light stabilizers, anti-oxidants, lubricants, flame retardants, antistatics, pigments such as coloured pigments and/or carbon black and titanium dioxide. It is preferred that an indicator agent is incorporated which indicates saturation of the polymer foam.

As used herein, the term "saturation" means the state of a body of matter in which the amount of humidity absorbed has reached a maximum level, i.e. a thermodynamic equilibrium between the body of matter and the surrounding atmosphere with regard to humidity has been reached.

The afore-mentioned colouring adjuvants such as pigments can be incorporated in the foamable polymer preparation in amounts of up to 5 % by weight. Flame retardants, antistatics, fillers and fibres can be present in the foamable polymer preparation in amounts of up to 30 % by weight, preferably up to 10 % by weight.

Other adjuvants can be present in the foamable polymer preparation in amount of not more than 1.0 % by weight, preferably not more than 0.5 % by weight, most preferably not more than 0.05 % by weight.

The percentages described in relation to the amount of the adjuvants relate to the total weight of the foamable polymer preparation as specified above.

Combinations of synthetic polyolefin, functional additive and HEM

In the following, especially preferred combinations of synthetic polyolefin, functional additive and HEM are described.

In a preferred embodiment, the foamable polymer preparation defined hereinabove comprises

(a) 19.9 to 89.9 % by weight of at least one synthetic polyolefin which single polymer or group of synthetic polyolefins has a water absorption of 0.5 % or less, as determined according to ASTM D570:1998 wherein a sample of cylindrical shape having a diameter of 25 mm and a thickness of 2.0 mm is used, and a softening point as measured by the method according to ASTM D3104-99 and/or a dropping point as measured by the method according to ASTM D3954-99 in the range of 60 to 170 °C,
(b) 10 to 80 % by weight of at least one functional additive which is (b1) a zeolite and/or (b2) an oxygen scavenger, and
(c) 0.1 to 5.0 % by weight of heat-expandable microspheres containing a liquid hydrocarbon encapsulated in a gas-tight thermoplastic shell that expand when heated to the softening point and/or the dropping point of said at least one polymer (a);

wherein the percentages are related to the total weight of (a), (b) and (c), and
wherein the total amount of (a), (b) and (c) is 70 to 100 % by weight, based on the total weight of the foamable polymer preparation.

In a more preferred embodiment, the foamable polymer preparation comprises

(a) 19.9 to 89.9 % by weight of said at least one synthetic polyolefin (a) which single synthetic polyolefin or group of synthetic polyolefins has a water absorption of 0.5 % or less and a softening point and/or a dropping point in the range of 65 to 145 °C,
(b) 10 to 80 % by weight of at least one functional additive which is (b1) a zeolite and/or (b2) an oxygen scavenger, and
(c) 0.1 to 5.0 % by weight of heat-expandable microspheres containing a liquid hydrocarbon encapsulated in a gas-tight thermoplastic shell that expand when heated to the softening point and/or the dropping point of said at least one polymer (a).

In a still more preferred embodiment, the foamable polymer preparation comprises

(a) 19.9 to 89.9 % by weight of said at least one synthetic polyolefin (a) which single synthetic polyolefin or group of synthetic polyolefins has a water absorption of 0.5 % or less and a softening point and/or a dropping point in the range of 85 to 120 °C,
(b) 10 to 80 % by weight of at least one functional additive which is (b1) a zeolite and/or (b2) an oxygen scavenger, and
(c) 0.1 to 5.0 % by weight of heat-expandable microspheres containing a liquid hydrocarbon encapsulated in a gas-tight thermoplastic shell that expand when heated to the softening point and/or the dropping point of said at least one polymer (a).

In another preferred embodiment, the foamable polymer preparation comprises

(a) 24.5 to 69.5 % by weight of said at least one synthetic polyolefin (a) which single synthetic polyolefin or group of synthetic polyolefins has a water absorption of 0.5 % or less and a softening point and/or a dropping point in the range of 65 to 145 °C,

(b) 30 to 75 % by weight of at least one functional additive which is (b1) a zeolite and/or (b2) an oxygen scavenger, and
(c) 0.5 to 2.0 % by weight of heat-expandable microspheres containing a liquid hydrocarbon encapsulated in a gas-tight thermoplastic shell that expand when heated to the softening point and/or the dropping point of said at least one synthetic polyolefin (a).

In a more preferred embodiment, the foamable polymer preparation comprises

(a) 24.5 to 69.5 % by weight of said at least one synthetic polyolefin (a) which single synthetic polyolefin or group of synthetic polyolefins has a water absorption of 0.5 % or less and a softening point and/or a dropping point in the range of 85 to 120 °C,
(b) 30 to 75 % by weight of at least one functional additive which is (b1) a zeolite and/or (b2) an oxygen scavenger, and
(c) 0.5 to 2.0 % by weight of heat-expandable microspheres containing a liquid hydrocarbon encapsulated in a gas-tight thermoplastic shell that expand when heated to the softening point and/or the dropping point of said at least one synthetic polyolefin (a).

In another preferred embodiment, the foamable polymer preparation comprises

(a) 29 to 59 % by weight of said at least one synthetic polyolefin (a) which single synthetic polyolefin or group of synthetic polyolefins has a water absorption of 0.5 % or less and a softening point and/or a dropping point in the range of 65 to 145 °C,
(b) 40 to 70 % by weight of at least one functional additive which is (b1) a zeolite and/or (b2) an oxygen scavenger, and
(c) 1.0 to 1.5 % by weight of heat-expandable microspheres containing a liquid hydrocarbon encapsulated in a gas-tight thermoplastic shell that expand when heated to the softening point and/or the dropping point of said at least one synthetic polyolefin (a).

In a more preferred embodiment, the foamable polymer preparation comprises

(a) 29 to 59 % by weight of said at least one synthetic polyolefin (a) which single synthetic polyolefin or group of synthetic polyolefins has a water absorption of 0.5 % or less and a softening point and/or a dropping point in the range of 85 to 120 °C,
(b) 40 to 70 % by weight of at least one functional additive which is (b1) a zeolite and/or (b2) an oxygen scavenger, and
(c) 1.0 to 1.5 % by weight of heat-expandable microspheres containing a liquid hydrocarbon encapsulated in a gas-tight thermoplastic shell that expand when heated to the softening point and/or the dropping point of said at least one synthetic polyolefin (a).

In each of the embodiments described hereinabove, the total amount of (a), (b) and (c) preferably is 80 to 100 %, more preferably 90 to 100 %, based on the total weight of the foamable polymer preparation.

The foamable polymer preparations described above are suitable to result in compositions comprising foamed synthetic polyolefins and desiccants and having high and rapid absorption of humidity and/or oxygen.

The second object of the present invention is achieved by providing a foamed composition obtainable by heating the foamable polymer preparation as disclosed hereinabove to at least the softening point and/or the dropping point of said single synthetic polyolefin or said group of synthetic polyolefins (a).

The foamed composition can have a moisture uptake of 2.5 g or more per 100 g of zeolite contained within said composition within a time period of 168 hours at 23 °C and 40 % relative humidity, starting from the water-free composition comprising the foamed synthetic polyolefin and the zeolite.

The moisture uptake per time unit is regulated by the type of the synthetic polyolefin, by the type of desiccant as well as the size and the number of the cells in the foamed synthetic polyolefin which are determined by the amount and the type of the HEM.

Method of manufacture

The foamable polymer preparations and the foamed compositions of the present invention can be produced by the following processes.

The foamable polymer preparations of the present invention can be prepared by dry mixing 19.9 to 89.9 % by weight of said at least one synthetic polyolefin (a), 10 to 80 % by weight of said functional additive (b), and 0.1 to 5.0 % by weight of said HEM (c);
wherein the percentages are related to the total weight of (a), (b) and (c), and
wherein the total amount of (a), (b) and (c) is 70 to 100 % by weight, based on the total weight of the foamable polymer preparation.

Optionally, any of the above-described adjuvants can be admixed.

The foamed composition according to the present invention can be produced by a process comprising the steps of

(i) providing a foamable polymer preparation as described hereinabove, and

(ii) heating said foamable polymer preparation to at least the softening point and/or the dropping point of said single synthetic polyolefin or group of synthetic polyolefins (a) under mixing.

Above-mentioned step (i) can be carried out by preparing a mixture from the individual components (a), (b), (c) and optionally further adjuvants in a mixing apparatus prior to the application of heat in above-mentioned step (ii). As an alternative, it is also possible to provide the above individual components separately and to effect mixing simultaneously with the application of heat. As a further alternative, it is also possible to prepare a mixture of components (a) and (b), for instance as a masterbatch, and to subsequently admix component (c) under heating.

Mixing in step (ii) can be carried out by a method appropriate in particular with respect to the viscosity of the composition heated to at least the softening point and/or the dropping point of said single synthetic polyolefin or group of synthetic polyolefins (a). While generally any mixing apparatus can be used for mixing the components, the choice of the mixing apparatus to be used in the production of a specific composition will be governed by the requirements for thoroughly intermingling the components such as temperature and shear requirements for providing a uniform mixture considering the viscosity of the composition heated to at least the softening point and/or the dropping point of said single synthetic polyolefin or group of synthetic polyolefins (a).

Under practical points of view, the composition can be heated to a temperature of 20-30 °C above the softening and/or dropping point of the synthetic polyolefin (a).

Said single synthetic polyolefin or group of synthetic polyolefins (a) will usually adopt a state of relatively low viscosity when heated to at least the softening point and/or the dropping point. Therefore, mixing can be effected in a heated container equipped with a stirring apparatus and no sophisticated mixing equipment is required.

According to the third aspect of the invention, articles produced from the foamed composition by moulding are provided, especially articles for packaging pharmaceutical and diagnostic products.

For instance, said article can be an insert or lining for a container such as a bottle or cylindrical tube for packaging tablets or an insert for a cap suitable for closing a bottle, a tube or any other kind of container. By arranging said article in the interior space of a container, the container is rendered suitable for storing goods that are sensitive to prolonged exposure to humidity and/or oxygen.

The foamed composition can be moulded by any conventionally applied method of moulding a polymer composition such as by casting and injection moulding. Furthermore, moulding can be effected by coating the molten polymer preparation on a pre-shaped article. Preferably during the step of melt-coating, expansion of the HEM is effected, for instance by suitably adjusting the temperature of the molten preparation such that a layer of the foamed composition of the present invention is formed on said pre-shaped article. For instance, said pre-shaped article can be a container of which the interior wall surface is at least partially melt-coated such that a container having a foamed composition comprising said functional additive on its interior wall surface is provided. No complex equipment such as co-extrusion equipment is required.

The pre-shaped article can be manufactured from a common thermoplastic polymer which usually has a softening temperature of 150 °C or more, for instance by moulding techniques such as injection moulding. The viscosity of the preparation of the present invention is sufficiently low for melt-coating at a temperature that does not reach the softening temperature of the thermoplastic polymer from which said pre-shaped article is manufactured. Therefore, the risk of deformation of the pre-shaped article during the aforementioned melt-coating procedure is minimized.

**Examples**

**Example 1:** Determination of the temperature required for expanding a specific type of HEM

The temperature at which a specific type of HEM (Expancel 031 DUX 40; available from Akzo Nobel) can be expanded was determined by the following procedure.

The specific HEM type was filled into glass capillaries (height 80 mm, outer diameter 1.55 mm) commonly used for melting point measurements and gently tapped on a hard surface in order to compact the HEM filling within the capillary. The height of the filling was measured.

The temperature of the oil bath of a Büchi Melting Point Apparatus B-535 was set to a temperature in the range of from 60-190 °C (i.e. such that the softening point and/or the dropping point is encompassed), the filled capillary was inserted into a capillary holder and the capillary holder was immersed into the oil bath. After 30 seconds, the height of the filling within the capillaries was measured and the relative volume increase was calculated as a percentage according to the following formula (2):

```
relative volume increase = [(filling height after heating) -
(filling height before heating)]/(filling height before
heating) × 100                        (2)
```

The following data were obtained.

| Temperature [°C] | Filling height [mm] | | relative volume increase [%] |
|---|---|---|---|
| | before heating | after heating | |
| 60 | 10 | 10 | 0 |
| 70 | 10 | 10 | 0 |
| 80 | 10 | 12 | 20 |
| 90 | 10 | 18 | 80 |
| 100 | 4,5 | 28 | 522 |
| 110 | 5 | 37 | 640 |
| 120 | 4,5 | 40 | 788 |
| 130 | 4 | 43 | 975 |
| 140 | 4 | 42 | 950 |
| 150 | 4 | 40 | 900 |
| 160 | 4,5 | 46 | 922 |
| 170 | 4,5 | 40 | 788 |
| 180 | 4 | 17 | 325 |
| 190 | 4 | 5 | 25 |

It can be seen that Expancel 031 DUX 40 shows a volume increase by 20 % or more at a temperature of 80 °C or higher. Thus, Expancel 031 DUX 40 is suitable for being used in foamable polymer preparations according to the present invention in which the at least one polymer (a) has a softening point and/or dropping point of 80 °C or higher.

**Example 2:** Determination of water absorption of synthetic polyolefins

The water absorption of a specific polymer grade (Licocene PP 1302, dropping point 87-93 °C; available from Clariant) was determined according to the following procedure which is based on ASTM D570:1998.

The powdery polymer was molten in a glass mould having bores with a diameter of 25 mm and a depth of 2.0 mm on a hot plate at a temperature of about 150 °C. The mould was allowed to cool, the disc-shaped samples were removed from the mould, dried under vacuum at a temperature of 60 °C, allowed to cool and stored in a desiccator. The weight of each sample was determined. The samples were immersed in distilled water at a temperature of 23 °C for a period of 24 hours, removed from the water and tapped dry with a lint-free cloth. The weight of each sample was determined and the water absorption (i.e. the relative weight increase) was calculated as a percentage according to the following formula (3):

```
Water absorption = [(sample weight after immersion) - (sample
weight before immersion)]/(sample weight before
immersion) × 100                        (3)
```

The following data were obtained.

| Sample no. | Sample weight [g] | | water absorption [%] |
| | before immersion | after immersion | |
| --- | --- | --- | --- |
| 1 | 0,4409 | 0,4411 | 0,05 |
| 2 | 0,4763 | 0,4765 | 0,04 |
| 3 | 0,4010 | 0,4015 | 0,12 |
| Mean water absorption | | | 0,07 |

It can be seen that Licocene PP 1302 has a water absorption of less than 0.5 %. As mentioned hereinabove, the dropping point is 87-93 °C. Licocene PP 1302 hence represents a synthetic polyolefin suitable for being used in the present invention.

**Example 3:** Moisture absorption of a foamed composition comprising a synthetic polyolefin, a zeolite and expanded microspheres

The following materials were used.

Synthetic polyolefin (a):

| Tradename | Supplier | Water absorption [%] | Dropping point [°C] |
| --- | --- | --- | --- |
| Luwax A | BASF | 0.04 | 107-114 |
| Luwax AH 3 | BASF | 0.06 | 112-120 |
| Luwax AL 3 | BASF | 0.03 | 101-112 |
| Licocene PP 1302 | Clariant | 0.07 | 87-93 |

Zeolite: Molecular Sieve with pore size 4 Å (0.4 nm) in the form of a powder (Siliporite® NK 10 AP, particle size 20 $\mu$m; available from Ceca).

HEM: Expancel 031 DUX 40

Samples of the foamed composition comprising a synthetic polyolefin, a zeolite and expanded microspheres were prepared according to the procedure exemplified in the following.

61 g of Luwax A were molten in a glass beaker at a temperature of 120 °C. 38 g of zeolite was added under kneading, 1 g of Expancel 031 DUX 40 was added and kneading was continued until the zeolite and the microspheres were homogeneously dispersed in the polymer.

The composition was filled into a Makrolon mould having 16 bores with a diameter of 22 mm and a depth of 6 mm, allowed to cool, removed from the mould. Thus, tablet-shaped samples of a foamed composition comprising a synthetic polyolefin, a zeolite and expanded microspheres were obtained.

The weight of each freshly prepared sample was measured and the samples were stored under an atmosphere having a defined relative humidity. For this purpose, each sample was stored in a desiccator over a saturated aqueous solution of a sodium salt which contained a deposit of undissolved salt in order to ensure that the solution was saturated.

When the sodium salt was sodium bromide, a relative humidity of 60 % at ambient temperature (23 °C) was established in the desiccator. When the sodium salt was sodium iodide, a relative humidity of 40 % at ambient temperature (23 °C) was established in the desiccator.

After a specific period of time had elapsed (t = x), each sample was weighed in order to determine the moisture uptake.

Absolute moisture uptake (AMU) was calculated on basis of the sample weight at t = x and the weight of the freshly prepared sample (t = 0; initial sample weight) according to the following formula (4):

$$AMU = (sample\ weight\ (t = x)) - (initial\ sample\ weight) \quad (4)$$

Relative moisture uptake (RMU) was calculated in percent by weight on basis of the sample weight at t = x and the weight of the freshly prepared sample (t = 0; initial sample weight) according to the following formula (5):

$$RMU = [(sample\ weight\ (t = x) - initial\ sample\ weight)]/(initial\ sample\ weight) \times 100 \quad (5)$$

Comparative samples were prepared by replacing the HEM with synthetic polyolefin, i.e the content of zeolite was constant. The moisture uptake of the comparative samples was determined in same manner as described hereinabove with respect to the samples containing a foamed composition.

The ratio of the RMU for the foamed sample (according to the invention) and for the comparative (= unfoamed) sample is calculated in order to demonstrate an effect of the invention according to the formula (6):

$$r = RMU(foamed\ sample)/RMU(unfoamed\ sample) \quad (6)$$

**Example 3.1:** Moisture uptake of a foamed composition containing 61 % by weight of Licocene PP 1302, 38 % by weight of zeolite and 1 % by weight of Expancel 031 DUX 40.

The foamed composition according to the present invention was compared to a comparative (unfoamed) composition containing 62 % by weight of Licocene PP 1302 and 38 % by weight of zeolite regarding the moisture uptake under an atmosphere of 40 % at 23 °C (i.e. using a saturated aqueous solution of sodium iodide as the humectant).

The following results were obtained.

| time | | foamed sample | | | unfoamed sample | | | |
|---|---|---|---|---|---|---|---|---|
| [h] | [day] | sample weight [g] | AMU [g] | RMU [%] | sample weight [g] | AMU [g] | RMU [%] | r |
| 0 | 0,0 | 1,6549 | 0,0000 | 0,00 | 1,9730 | 0,0000 | 0,00 | |
| 22 | 0,9 | 1,6673 | 0,0124 | 0,75 | 1,9824 | 0,0094 | 0,48 | 1,57 |
| 95 | 4,0 | 1,6816 | 0,0267 | 1,61 | 1,9949 | 0,0219 | 1,11 | 1,45 |
| 118 | 4,9 | 1,6851 | 0,0302 | 1,82 | 1,9976 | 0,0246 | 1,25 | 1,46 |
| 143 | 6,0 | 1,6879 | 0,0330 | 1,99 | 2,0002 | 0,0272 | 1,38 | 1,45 |
| 166 | 6,9 | 1,6893 | 0,0344 | 2,08 | 2,0012 | 0,0282 | 1,43 | 1,45 |
| 191 | 8,0 | 1,6911 | 0,0362 | 2,19 | 2,0030 | 0,0300 | 1,52 | 1,44 |
| 263 | 11,0 | 1,6966 | 0,0417 | 2,52 | 2,0075 | 0,0345 | 1,75 | 1,44 |
| 333 | 13,9 | 1,7014 | 0,0465 | 2,81 | 2,0120 | 0,0390 | 1,98 | 1,42 |
| 502 | 20,9 | 1,7104 | 0,0555 | 3,35 | 2,0200 | 0,0470 | 2,38 | 1,41 |
| 602 | 25,1 | 1,7156 | 0,0607 | 3,67 | 2,0243 | 010513 | 2,60 | 1,41 |
| 763 | 31,8 | 1,7234 | 0,0685 | 4,14 | 2,0309 | 0,0579 | 2,93 | 1,41 |

It can be seen that the foamed composition according to the present invention has absorbed more moisture after each period of time.

**Example 3.2:** Moisture uptake of a foamed composition containing 61 % by weight of a polymer, 38 % by weight of zeolite and 1 % by weight of Expancel 031 DUX 40 at a relative humidity of 40 %.

A sample of the foamed composition according to the present invention was compared to a sample of a comparative (unfoamed) composition containing 62 % by weight of the synthetic polyolefin indicated in the table and 38 % by weight of zeolite regarding the moisture uptake under an atmosphere of 40 % at 23 °C (i.e. using a saturated aqueous solution of sodium iodide as the humectant).

The moisture uptake was evaluated by calculating RMU after a period of one week (7 days, 168 hours) had elapsed.

The following results were obtained.

| (RH = 40%) | RMU [%] | | |
|---|---|---|---|
| Synthetic polyolefin | foamed | unfoamed | r |
| Luwax A | 1,29 | 0,63 | 2,04 |
| Luwax AH | 1,93 | 0,57 | 3,42 |
| Luwax AL | 0,99 | 0,75 | 1,32 |
| Licocene PP 1302 | 2,11 | 1,46 | 1,45 |
| RH = relative humidity | | | |

It can be seen that the foamed composition according to the invention has absorbed more moisture over the observed period of time.

In order to compensate for the amount of zeolite present in the composition, the absolute moisture uptake (AMU) can be related to the amount of zeolite present in the composition (instead of the entire composition comprising polymer, zeolite and HEM). The zeolite-related moisture uptake (ZRMU) can hence be calculated according to the following formula (7).

$$ZRMU = [(\text{sample weight } (t = x) - \text{initial sample weight})]/(\text{weight of dry zeolite}) \times 100 \qquad (7)$$

In the case of the compositions of the present example where the amount of zeolite relative to the total amount of synthetic polyolefin (a), zeolite and HEM is 38 %, ZRMU can also be calculated according to the following formula (8).

$$ZRMU = RMU \times 100/38 \qquad (8)$$

The results of this calculation are shown in the following table.

| (RH = 40%) | ZRMU [%] | |
|---|---|---|
| Synthetic polyolefin | foamed | unfoamed |
| Luwax A | 3,39 | 1,66 |
| Luwax AH | 5,09 | 1,49 |
| Luwax AL | 2,60 | 1,97 |
| Licocene PP 1302 | 5,56 | 3,84 |
| RH = relative humidity | | |

**Example 3.3:** Moisture uptake of a foamed composition containing 61 % by weight of a synthetic polyolefin, 38 % by weight of zeolite and 1 % by weight of Expancel 031 DUX 40 at a relative humidity of 60 %.

A foamed sample of the composition according to the present invention was compared to a sample of a comparative (unfoamed) composition containing 62 % by weight of the synthetic polyolefin indicated in the table and 38 % by weight of zeolite regarding the moisture uptake under an atmosphere of 60 % at 23 °C (i.e. using a saturated aqueous solution of sodium bromide as the humectant).

The moisture uptake was evaluated by calculating RMU after a period of one week (7 days, 168 hours) had elapsed.

The following results were obtained.

| (RH = 60%) | RMU [%] | | | ZRMU [%] | |
|---|---|---|---|---|---|
| Polymer | foamed | unfoamed | r [%] | foamed | unfoamed |
| Luwax A | 1,87 | 1,06 | 1, 77 | 4, 93 | 2,78 |
| Luwax AH | 2,28 | 0,76 | 3, 00 | 5,99 | 2,00 |
| Luwax AL | 1,19 | 1,03 | 1,16 | 3,14 | 2,71 |
| Licocene PP 1302 | 2,47 | 1,89 | 1,31 | 6,51 | 4,98 |
| RH = relative humidity | | | | | |

It can be seen that the foamed composition according to the invention has absorbed more moisture over the observed period of time.

**Claims**

1.  Foamable polymer preparation comprising

    (a) 19.9 to 89.9 % by weight of at least one synthetic polyolefin which single synthetic polyolefin or group of synthetic polyolefins has

    (i) a water absorption of 0.5 % or less, determined according to ASTM D570:1998 wherein a sample of cylindrical shape having a diameter of 25 mm and a thickness of 2.0 mm is used, and
    (ii) a softening point as measured by the method according to ASTM D3104-99 and/or a dropping point as measured by the method according to ASTM D3954-94 in the range of 60 to 170 °C,

    (b) 10 to 80 % by weight of at least one functional additive which is (b1) a zeolite and/or (b2) an oxygen scavenger, and
    (c) 0.1 to 5.0 % by weight of heat-expandable microspheres containing a liquid hydrocarbon encapsulated in a gas-tight thermoplastic shell that expand when heated to the softening point and/or the dropping point of said at least one synthetic polyolefin (a),

    wherein the percentages are related to the total weight of (a), (b) and (c), and
    wherein the total amount of (a), (b) and (c) is 70 to 100 % by weight, based on the total weight of the foamable polymer preparation.

2.  Foamable polymer preparation according to claim 1 comprising said at least one synthetic polyolefin (a) in an amount of 24.5-69.5 % by weight, said functional additive (b) in an amount of 30-75 % by weight and said heat-expandable microspheres (c) in an amount of 0.5-2.0 % by weight.

3.  Foamable polymer preparation according to claim 1 comprising said at least one synthetic polyolefin (a) in an amount of 29-59 % by weight, said functional additive (b) in an amount of 40-70 % by weight and said heat-expandable microspheres (c) in an amount of 1.0-1.5 % by weight.

4.  Foamable polymer preparation according to any of claims 1 to 3, wherein the softening point and/or the dropping point of said single synthetic polyolefin or said group of synthetic polyolefins (a) is in the range of 65 to 145 °C.

5.  Foamable polymer preparation according to any of claims 1 to 3, wherein the softening point and/or the dropping point of said single synthetic polyolefin or said group of synthetic polyolefins (a) is in the range of 85 to 120 °C.

6.  Foamable polymer preparation according to any of claims 1 to 5, wherein the water absorption of said single synthetic polyolefin or said group of synthetic polyolefins (a) is 0.35 % or less.

7.  Foamable polymer preparation according to any of claims 1 to 6, wherein the total amount of (a), (b) and (c) is 80 to 100 % by weight, based on the total weight of the foamable polymer preparation.

8. Foamable polymer preparation according to any of claims 1 to 6, wherein the total amount of (a), (b) and (c) is 90 to 100 % by weight, based on the total weight of the foamable polymer preparation.

9. Foamable polymer preparation according to any of claims 1 to 8, further comprising 0 to 5 % by weight of pigments, based on the total weight of the foamable polymer preparation.

10. Foamable polymer preparation according to any of claims 1 to 6, further comprising 0 to 30 % by weight of flame retardants, antistatics, fillers and fibres, based on the total weight of the foamable polymer preparation.

11. Foamable polymer preparation according to any of claims 1 to 10, further comprising 0 to 1 % by weight of light stabilizers, anti-oxidants, lubricants, and processing stabilizers, based on the total weight of the foamable polymer preparation.

12. Foamed composition obtainable by heating the foamable polymer preparation as in any one of claims 1 to 11 to at least the softening point and/or the dropping point of said single synthetic polyolefin or said group of synthetic polyolefins.

13. Process for preparing a foamed composition as defined in claim 12 comprising the steps of

(i) providing a foamable polymer preparation as defined in any of claims 1 to 11, and
(ii) heating said preparation to at least the softening point and/or the dropping point of said single synthetic polyolefin or said group of synthetic polyolefins (a) under mixing.

14. Article prepared from the foamed composition as defined in claim 12 by moulding.


**Patentansprüche**

1. Aufschäumbare Polymerzubereitung umfassend

(a) 19,9 bis 89,9 Gew.-% wenigstens eines synthetischen Polyolefins, wobei das einzelne synthetische Polyolefin oder die Gruppe synthetischer Polyolefine

(i) eine Wasserabsorption von 0,5 % oder weniger, bestimmt gemäß ASTM D570:1998, worin eine Probe mit zylindrischer Form, einem Durchmesser von 25 mm und einer Dicke von 2,0 mm verwendet wird, und
(ii) einen Erweichungspunkt, gemessen nach dem Verfahren gemäß ASTM D3104-99, und/oder einen Tropfpunkt, gemessen nach dem Verfahren gemäß ASTM D3954-94, im Bereich von 60 bis 170 °C aufweist,

(b) 10 bis 80 Gew.-% wenigstens eines funktionellen Additivs, das (b1) ein Zeolith und/oder (b2) ein Sauerstofffänger ist, und
(c) 0,1 bis 5,0 Gew.-% warm expandierbarer Mikrokugeln, die einen flüssigen Kohlenwasserstoff enthalten, der in einer gasdichten thermoplastischen Hülle eingekapselt ist, die sich expandiert, wenn sie bis zum Erweichungspunkt und/oder dem Tropfpunkt des wenigstens einen synthethischen Polyolefins (a) erwärmt wird,

wobei sich die Prozentangaben auf das Gesamtgewicht von (a), (b) und (c) beziehen und
worin die Gesamtmenge von (a), (b) und (c) 70 bis 100 Gew.-% bezogen auf das Gesamtgewicht der aufschäumbaren Polymerzubereitungen beträgt.

2. Aufschäumbare Polymerzubereitung gemäß Anspruch 1, umfassend das wenigstens eine synthetische Pololefin (a) in einer Menge von 24,5 bis 69,5 Gew.-%, das funktionelle Additiv (b) in einer Menge von 30 bis 75 Gew.-% und die warm expandierbaren Mikrokugeln (c) in einer Menge von 0,5 bis 2,0 Gew.-%.

3. Aufschäumbare Polymerzubereitung gemäß Anspruch 1 umfassend das wenigstens eine synthetische Polyolefin (a) in einer Menge von 29 bis 59 Gew.-%, das funktionelle Additiv (b) in einer Menge von 40 bis 70 Gew.-% und die warm expandierbaren Mikrokugeln (c) in einer Menge von 1,0 bis 1,5 Gew.-%.

4. Aufschäumbare Polymerzubereitung gemäß einem der Ansprüche 1 bis 3, wobei der Erweichungspunkt und/oder der Tropfpunkt des einzelnen synthetischen Polyolefins oder der Gruppe synthetischer Polyolefine (a) im Bereich von 65 bis 145 °C liegt.

5. Aufschäumbare Polymerzubereitung gemäß einem der Ansprüche 1 bis 3, wobei der Erweichungspunkt und/oder der Tropfpunkt des einzelnen synthetischen Polyolefins oder der Gruppe synthetischer Polyolefine (a) im Bereich von 85 bis 120 °C liegt.

6. Aufschäumbare Polymerzubereitung gemäß einem der Ansprüche 1 bis 5, worin die Wasserabsorption des einzelnen synthetischen Polyolefins oder der Gruppe synthetischer Polyolefine (a) 0,35 % oder weniger beträgt.

7. Aufschäumbare Polymerzubereitung gemäß einem der Ansprüche 1 bis 6 worin die Gesamtmenge von (a), (b) und (c) 80 bis 100 Gew.-% bezogen auf das Gesamtgewicht der aufschäumbaren Polymerzubereitung beträgt.

8. Aufschäumbare Polymerzubereitung gemäß einem der Ansprüche 1 bis 6 worin die Gesamtmenge von (a), (b) und (c) 90 bis 100 Gew.-% bezogen auf das Gesamtgewicht der aufschäumbaren Polymerzubereitung beträgt.

9. Aufschäumbare Polymerzubereitung gemäß einem der Ansprüche 1 bis 8 ferner umfassend 0 bis 5 Gew.-% Pigmente bezogen auf das Gesamtgewicht der aufschäumbaren Polymerzubereitung.

10. Aufschäumbare Polymerzubereitung gemäß einem der Ansprüche 1 bis 6 ferner umfassend 0 bis 30 Gew.-% flammenhemmende Mittel, antistatische Mittel, Füllstoffe und Fasern bezogen auf das Gesamtgewicht der aufschäumbaren Polymerzubereitung.

11. Aufschäumbare Polymerzubereitung gemäß einem der Ansprüch 1 bis 10 ferner umfassend 0 bis 1 Gew.-% Lichtstabilisatoren, Antioxidantien, Gleitmittel und Verarbeitungsstabilisatoren bezogen auf das Gesamtgewicht der aufschäumbaren Polymerzubereitung.

12. Aufgeschäumte Zusammensetzung erhältlich durch Erwärmen der aufschäumbaren Polymerzubereitung gemäß einem der Ansprüche 1 bis 11 wenigstens bis zum Erweichungspunkt und/oder dem Tropfpunkt des einzelnen synthetischen Polyolefins oder der Gruppe synthetischer Polyolefine.

13. Verfahren zum Herstellen einer aufgeschäumten Zusammensetzung wie in Anspruch 12 definiert umfassend die Schritte

   (i) Bereitstellen einer aufschäumbaren Polymerzubereitung wie in einem der Ansprüche 1 bis 11 definiert, und
   (ii) Erwärmen der Zubereitung bis zum Erweichungspunkt und/oder Tropfpunkt des einzelnen synthetischen Polyolefins oder der Gruppe synthetischer Polyolefine (a) unter Mischen.

14. Gegenstand, der durch Formgeben aus der geschäumten Zusammensetzung wie in Anspruch 12 definiert hergestellt worden ist.


**Revendications**

1. Préparation polymère expansible comprenant

   (a) 19,9 à 89,9 % en poids d'au moins une polyoléfine synthétique, laquelle polyoléfine synthétique unique ou un groupe de polyoléfines synthétiques présente :

      (i) une absorption d'eau de 0,5 % ou moins, déterminée selon la norme ASTM D570:1998 où un échantillon de forme cylindrique ayant un diamètre de 25 mm et une épaisseur de 2,0 mm est utilisé, et
      (ii) un point de ramollissement tel que mesuré par le procédé selon la norme ASTM D3104-99 et/ou un point de goutte tel que mesuré par le procédé selon la norme ASTM D3954-94 dans la plage allant de 60 à 170 °C,

   (b) 10 à 80 % en poids d'au moins un additif fonctionnel qui est (b1) une zéolite et/ou (b2) un éliminateur d'oxygène, et
   (c) 0,1 à 5,0 % en poids de microsphères thermoexpansibles contenant un hydrocarbure liquide encapsulé dans une coque thermoplastique étanche aux gaz qui se dilatent lorsqu'elles sont chauffées jusqu'au point de ramollissement et/ou au point de goutte de ladite au moins une polyoléfine synthétique (a),

où les pourcentages se rapportent au poids total de (a), (b) et (c), et
où la quantité totale de (a), (b) et (c) est de 70 à 100 % en poids, sur la base du poids total de la préparation polymère expansible.

2. Préparation polymère expansible selon la revendication 1, comprenant ladite au moins une polyoléfine synthétique (a) en une quantité allant de 24,5 à 69,5 % en poids, ledit additif fonctionnel (b) en une quantité allant de 30 à 75 % en poids et lesdites microsphères thermoexpansibles (c) en une quantité allant de 0,5 à 2,0 % en poids.

3. Préparation polymère expansible selon la revendication 1, comprenant ladite au moins une polyoléfine synthétique (a) en une quantité allant de 29 à 59% en poids, ledit additif fonctionnel (b) en une quantité allant de 40 à 70 % en poids et lesdites microsphères thermoexpansibles (c) en une quantité allant de 1,0 à 1,5 % en poids.

4. Préparation polymère expansible selon l'une des revendications 1 à 3, dans laquelle le point de ramollissement et/ou le point de goutte de ladite polyoléfine synthétique unique ou dudit groupe de polyoléfines synthétiques (a) est dans la plage allant de 65 à 145 °C.

5. Préparation polymère expansible selon l'une des revendications 1 à 3, dans laquelle le point de ramollissement et/ou le point de goutte de ladite polyoléfine synthétique unique ou dudit groupe de polyoléfines synthétiques (a) est dans la plage allant de 85 à 120 °C.

6. Préparation polymère expansible selon l'une des revendications 1 à 5, dans laquelle l'absorption d'eau de ladite polyoléfine synthétique unique ou dudit groupe de polyoléfines synthétiques (a) est de 0,35 % ou moins.

7. Préparation polymère expansible selon l'une des revendications 1 à 6, dans laquelle la quantité totale de (a), (b) et (c) est de 80 à 100 % en poids, sur la base du poids total de la préparation polymère expansible.

8. Préparation polymère expansible selon l'une des revendications 1 à 6, dans laquelle la quantité totale de (a), (b) et (c) est de 90 à 100 % en poids, sur la base du poids total de la préparation polymère expansible.

9. Préparation polymère expansible selon l'une des revendications 1 à 8, comprenant en outre de 0 à 5 % en poids de pigments, sur la base du poids total de la préparation polymère expansible.

10. Préparation polymère expansible selon l'une des revendications 1 à 6, comprenant en outre 0 à 30 % en poids de retardateurs de flammes, d'antistatiques, de charges et de fibres, sur la base du poids total de la préparation polymère expansible.

11. Préparation polymère expansible selon l'une des revendications 1 à 10, comprenant en outre de 0 à 1 % en poids de photostabilisants, d'antioxydants, de lubrifiants et de stabilisants de traitement, sur la base du poids total de la préparation polymère expansible.

12. Composition expansée pouvant être obtenue en chauffant la préparation polymère expansible selon l'une quelconque des revendications 1 à 11 jusqu'à au moins le point de ramollissement et/ou le point de goutte de ladite polyoléfine synthétique unique ou dudit groupe de polyoléfines synthétiques.

13. Processus de préparation d'une composition expansée telle que définie dans la revendication 12, comprenant les étapes qui consistent :

(i) à fournir une préparation polymère expansible telle que définie dans l'une des revendications 1 à 11, et
(ii) à chauffer ladite préparation jusqu'à au moins le point de ramollissement et/ou le point de goutte de ladite polyoléfine synthétique unique ou dudit groupe de polyoléfines synthétiques (a) en mélangeant.

14. Article préparé à partir de la composition expansée telle que définie dans la revendication 12 par moulage.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1739028 A1
- WO 2006079713 A1
- EP 0599690 A1
- WO 2005061101 A1
- EP 2096135 A1
- US 4916173 A
- EP 0400460 A
- EP 0881193 B1
- WO 02051914 A
- US 7097890 B
- US 5346644 A
- EP 0520257 A
- DE 19531631 A1
- DE 3436592 A1
- GB 2191945 A
- US 4843104 A
- GB 1044680 A
- US 3615972 A

### Non-patent literature cited in the description

- Structure Commission of the International Zeolite Association. Elsevier, 2001